Europäisches Patentamt

European Patent Office

Office européen des brevets

(19)

(11) Numéro de publication: **0 337 879**

**A1**

## (12) DEMANDE DE BREVET EUROPEEN

(21) Numéro de dépôt: 89401004.0

(22) Date de dépôt: 12.04.89

(51) Int. Cl.⁴: **G 11 B 5/10**
G 11 B 5/31, G 11 B 5/187

(30) Priorité: 15.04.88 FR 8805015

(43) Date de publication de la demande:
18.10.89 Bulletin 89/42

(84) Etats contractants désignés:
BE CH DE GB IT LI NL

(71) Demandeur: **COMMISSARIAT A L'ENERGIE ATOMIQUE**
**31/33, rue de la Fédération**
**F-75015 Paris (FR)**

(72) Inventeur: **Deroux-Dauphin, Patrice**
**13 rue du kif Tronchard**
**F-38120 Saint Egreve (FR)**

(74) Mandataire: **Mongrédien, André et al**
**c/o BREVATOME 25, rue de Ponthieu**
**F-75008 Paris (FR)**

(54) Dispositif d'écriture et de lecture sur un support magnétique et son procédé de fabrication.

(57) Dispositif de lecture et d'écriture sur un support magnétique et son procédé de fabrication. Ce dispositif comprend au
moins une tête de lecture et d'écriture placée sur un patin ayant
un profil de type catamaran. La tête est composée d'un circuit
magnétique (bobinage (18) sur un support (16)) autopositionné et soudé aux parois d'un trou (12), pratiqué dans le patin,
d'un concentrateur de flux (26, 28) en contact avec des
extrémités du circuit magnétique et d'une pièce polaire
constituée de deux pièces magnétiques (36) séparées par un
espaceur amagnétique (34). La pièce polaire est positionnée en
vis-à-vis de la piste du support magnétique.

Application à la lecture et l'écriture d'informations sur des
supports magnétiques en forme de disque ou de bande.

FIG. 8

EP 0 337 879 A1

Description

## DISPOSITIF D'ECRITURE ET DE LECTURE SUR UN SUPPORT MAGNETIQUE ET SON PROCEDE DE FABRICATION

La présente invention a pour objet un dispositif d'écriture et de lecture sur un support magnétique et son procédé de fabrication. Elle s'applique notamment à la lecture et l'écriture sur des disques magnétiques rigides utilisés dans les ordinateurs.

Actuellement, une cellule élémentaire de stockage magnétique sur un support en forme de disque ou de bande nécessite une surface d'environ 100 à 120 micromètres carrés. Une cellule est décrite par la largeur de la piste d'enregistrement (typiquement 20 micromètres) et par le nombre de bits par unité de longueur.

Des cellules élémentaires de surface 0,5 à 25 micromètres carrés et de densité surfacique à peu près égale à 1 bit par micromètre carré sont aujourd'hui envisagées. La lecture et l'écriture d'informations sur de telles cellules nécessitent de nouveaux types de têtes magnétiques aux performances accrues.

Selon l'art antérieur, trois différents types de têtes coexistent : le premier type est celui conventionnel des têtes monolithiques, le second est formé par les têtes en couches minces, le troisième correspond aux têtes composites ou hybrides.

Les têtes mono et mini-monolithiques, de par le volume magnétique mis en jeu, engendrent un bruit important et ont une mauvaise résolution. Leur procédé de fabrication limite l'accès à des densités importantes et rend difficile le passage à des densités supérieures à 1200 TPI (tracks per inch en terminologie anglo-saxonne).

Les têtes en couches minces comportent beaucoup d'avantages, mais leur fabrication est complexe et leur coût est très élevé, la production en volume restant assez faible.

Seules les têtes composites ou hybrides permettent à la fois l'accès à des densités d'enregistrement importantes tout en consertant un coût de fabrication faible. Leurs performances actuelles se situent entre celles des deux autres types.

L'objet de la présente invention est de faire évoluer ces têtes hybrides vers des performances égales ou supérieures à celles des têtes en couches minces. Une tête de lecture et d'écriture selon l'invention permet en effet d'utiliser des pistes de largeur de 1 à 10 micromètres tout en conservant une tension de sortie élevée et une fréquence de résonance faible.

La présente invention porte également sur le procédé de réalisation de la tête, ce dernier allie des techniques de fabrication proches de la microélectronique et de la micromécanique. Ce procédé permet des techniques d'auto alignement et de centrage autorisant la mise en oeuvre de fabrication collective des têtes magnétiques. Ce procédé permet de diminuer les coûts de fabrication et d'obtenir des performances élevées.

Selon l'invention, la tête de lecture et d'écriture est constituée par un circuit magnétique rapporté comprenant un bobinage enroulé sur un support en matériau magnétique. Ce support a une forme qui rappelle un fer à cheval. Les extrémités de ce support sont en contact avec une première couche magnétique mince faisant office de concentrateur de flux. Ce concentrateur de flux présente une forme dont la plus faible largeur correspond à la largeur de la piste. Une seconde couche magnétique séparée du concentrateur de flux par une mince couche amagnétique est directement en vis-à-vis avec la piste. Cette seconde couche divisée en deux par un espaceur, fait office de pièce polaire de lecture et d'écriture.

La technologie utilisée pour fabriquer le dispositif selon l'invention permet le contrôle de la largeur de la tête de lecture. L'assemblage des divers éléments est simple, aisé et ne nécessite pas d'ajustement en fin de parcours grâce à des technologies d'auto-alignement. La stabilité mécanique du dispositif est bonne, les diverses vibrations que son utilisation lui fait subir ne l'éprouvent que fort peu.

De façon plus précise, la présente invention concerne un dispositif de lecture et d'écriture sur un support magnétique. Ce dispositif comprend au moins une tête magnétique de lecture et d'écriture réalisée sur un patin en silicium monocristallin, ce patin présentant un profil de type catamaran, ce patin ayant une face avant destinée à être en vis-à-vis dudit support magnétique et une face arrière, les faces avant et arrière étant orientées suivant le plan cristallographique 100 du silicium.

La tête magnétique de lecture et d'écriture comporte :
- un circuit magnétique placé dans un trou pratiqué dans la face arrière du patin, ce trou ayant une forme de caisson aux parois inclinées suivant les plans cristallographiques 111 du silicium, une butée aux parois inclinées suivant les plans cristallographiques 111 étant réservée au fond du trou, deux raccords électriques du circuit magnétique affleurant la face arrière du patin, le circuit magnétique étant fixé dans le caisson par un matériau apte à la soudure du circuit magnétique au caisson,
- un concentrateur de flux en contact avec des extrémités du circuit magnétique,
- une pièce polaire de lecture et d'écriture séparée du concentrateur de flux, par une couche conductrice et amagnétique, cette pièce polaire affleurant à la face avant du patin, et en ce qu'un matériau apte à maintenir et à fixer au patin le concentrateur de flux et la pièce polaire est en contact avec un masque recouvrant partiellement la couche conductrice et amagnétique, ce masque délimitant une localisation de la pièce polaire d'écriture et de lecture.

Le concentrateur de flux est constitué d'une couche en matériau magnétique, cette couche étant séparée en deux parties par une paroi en matériau amagnétique.

De manière préférée, la couche est en FeSiAl (Sendust en terminologie Anglo-saxonne) et en ce que le matériau amagnétique est du $SiO_2$.

On peut aussi employer pour la couche, du CoZr ou tout autre matériau présentant une perméabilité magnétique élevée.

On peut aussi employer comme matériau amagnétique de l'alumine ou tout autre matériau présentant des propriétés amagnétiques.

La pièce polaire de lecture et d'écriture est constituée d'une couche en matériau magnétique, cette couche étant séparée en deux pièces par un espaceur amagnétique.

De manière avantageuse, les pièces magnétiques de la pièce polaire sont en FeNi et l'espaceur amagnétique est en $SiO_2$.

On peut aussi utiliser pour l'espaceur d'autres matériaux tels que l'alumine ou tout autre matériau amagnétique.

La face arrière du patin est recouverte d'une couche protectrice en matériau isolant. Des ouvertures sont ménagées autour des raccords électriques.

De manière préférée, cette couche est en alumine. On peut aussi utiliser du $SiO_2$ ou tout autre matériau isolant et apte à former une couche de protection.

Le matériau apte à souder le circuit magnétique au caisson, et le matériau apte à maintenir et fixer le concentrateur de flux et la pièce polaire sont choisis parmi le verre fusible et les polymères thermodurcissables.

De manière préférée, le masque est en $SiO_2$, on peut aussi utiliser d'autres isolants.

La présente invention a aussi pour objet un procédé de fabrication du dispositif de lecture et d'écriture. Les différentes opérations du procédé sont effectuées sur une plaquette de silicium monocristallin, présentant une face avant et une face arrière auxquelles correspondent les faces avant et arrière d'un patin du dispositif. Les faces sont orientées suivant les plans cristallographiques 100 du silicium. Le procédé est collectif : on réalise environ 300 patins par plaquette de silicium.

Sur la face arrière de la plaquette :
- on effectue une gravure réticulaire de manière à creuser un trou en forme de caisson apte à recevoir un circuit magnétique. Une butée est ménagée au fond du trou. La gravure réticulaire est une gravure chimique. Les faces avant et arrière de la plaquette sont orientées suivant les plans d'orientation cristallins 100. La gravure chimique creuse le silicium suivant les plans d'orientation 111. Les parois du caisson sont donc inclinées à 54°7 par rapport au plan de la face avant de la plaquette ;
- on introduit dans le caisson ledit circuit magnétique. Ce circuit magnétique est composé de deux pièces : un bobinage dont les extrémités sont des raccords électriques et un support du bobinage (tore) en matériau magnétique, de la ferrite par exemple ou tout autre matériau ayant des bonnes propriétés magnétiques. Le support a une forme rappelant un fer à cheval. La forme particulière du caisson, ses parois inclinées et la butée permettent un auto-positionnement du circuit magnétique à l'intérieur du caisson.

Le circuit magnétique est fixé dans le caisson par un matériau apte à la soudure du circuit au caisson. Ce matériau apte à la soudure est de manière préférée du verre fusible. Ce peut être aussi un polymère thermodurcissable.

On dépose une couche d'un matériau isolant en ménageant un espace autour des raccords électriques. Cette couche, outre le fait qu'elle est isolante, permet de protéger le patin. Les raccords permettent la connexion à des fils électriques extérieurs par des soudures verre-$SiO_2$, par exemple.

Le matériau déposé est, de manière préférée, de l'alumine, ce peut être aussi du $SiO_2$.

Sur la face avant de la plaquette, on effectue une gravure par des procédés lithographiques connus de l'homme de métier (gravure réticulaire par exemple). Par cette gravure, on met à jour les extrémités magnétiques du circuit magnétique. Une avancée en silicium, prolongeant la butée située au fond du caisson, est réservée.

On réalise au fond de la gravure un concentrateur de flux. On effectue pour cela un dépôt d'un matériau magnétique par pulvérisation cathodique par exemple. Ce dépôt est ensuite gravé, ce qui permet d'une part de définir la forme du concentrateur, cette forme présentant une plus faible largeur correspondant à la largeur d'une piste magnétique et, d'autre part, de scinder en deux parties le dépôt de matériau magnétique et de ménager un espace entre ces deux parties. On dépose dans cet espace un matériau amagnétique, du $SiO_2$, par exemple. On peut aussi utiliser de l'alumine.

Les parties les plus larges du concentrateur de flux sont en contact avec les extrémités magnétiques du circuit magnétique, la partie de plus faible largeur reposant sur l'avancée en silicium.

On forme un dépôt de matériau conducteur et amagnétique sur le concentrateur de flux.

Ce matériau conducteur et amagnétique peut être du cuivre ou du tungstène.

On forme alors un dépôt servant de masque sur le concentrateur de flux. Ce masque recouvre partiellement le matériau conducteur déposé sur le concentrateur de flux et délimite la localisation d'une pièce polaire de lecture et d'écriture.

Ce masque peut être en matériau isolant, en $SiO_2$ par exemple.

On réalise, par électrodéposition d'un matériau magnétique, la pièce polaire de lecture et d'écriture dans l'emplacement réservé par le masque. Cette pièce polaire comprend deux parties magnétiques en FeNi par exemple, séparées par un espaceur en matériau amagnétique, du $SiO_2$ par exemple. L'espaceur peut aussi être en alumine. La pièce polaire fabriquée par des techniques lithographiques utilisées par ailleurs en microélectronique présente une grande définition, ces techniques connues étant bien contrôlées.

On dépose une couche de matériau apte à maintenir et à fixer sur la plaquette le concentrateur de flux et la pièce polaire. Ce matériau peut être du verre fusible, ce peut être aussi un polymère thermodurcissable.

On effectue un rodage mécanique de la face avant, de manière à la rendre plane.

On grave chimiquement des patins présentant le profil d'un catamaran.

On découpe la plaquette pour séparer les différents patins, chaque patin comprenant deux têtes d'écriture et de lecture.

Les différents patins sont prêts à l'emploi, ils ne nécessitent pas d'ajustement supplémentaire.

Les caractéristiques et avantages de l'invention apparaîtront mieux après la description qui suit donnée à titre explicatif et nullement limitatif. Cette description se réfère à des dessins annexés dans lesquels :

- la figure 1 représente schématiquement une plaquette de silicium destinée à la fabrication de dispositifs selon l'invention,

- la figure 2 représente en perspective et suivant une coupe longitudinale un caisson destiné à recevoir un circuit magnétique,

- la figure 3 représente schématiquement un dispositif selon l'invention tel qu'il est après travail sur la face arrière de la plaquette de silicium,

- la figure 4A représente schématiquement une coupe du dispositif selon l'invention après réalisation du concentrateur de flux,

- la figure 4B représente schématiquement une vue face avant du concentrateur de flux,

- les figures 5 à 7 représentent schématiquement les étapes de fabrication d'une pièce polaire de lecture et d'écriture,

- la figure 8 représente schématiquement une coupe longitudinale d'un dispositif selon l'invention,

- la figure 9 représente une vue en perspective d'un patin supportant deux têtes de lecture/écriture selon l'invention.

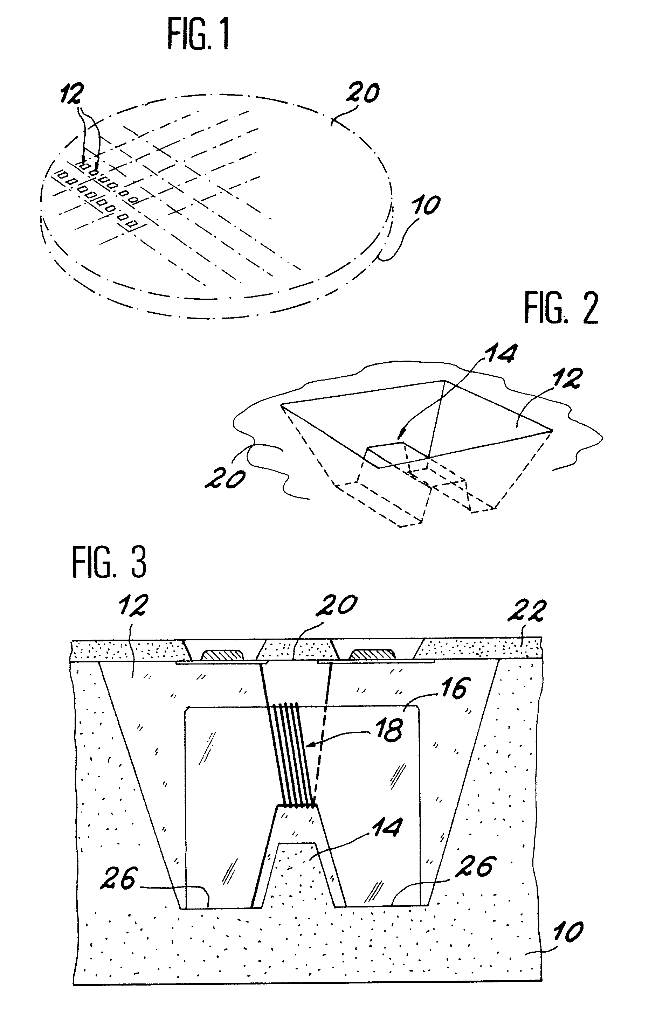

La figure 1 représente schématiquement une plaquette de silicium monocristallin destinée à la fabrication de dispositifs selon l'invention. On réalise environ 300 dispositifs d'écriture et de lecture par plaquette. Cette plaquette est épaisse d'environ 1,5 mm, par exemple. Cette plaquette présente une face avant 10 et une face arrière 20. La face avant 10 correspond à la face du dispositif destinée à être en vis-à-vis avec un support magnétique. Les faces avant 10 et arrière 20 sont orientées suivant le plan cristallographique 100 du silicium. Des trous 12 en forme de caisson sont creusés par gravure réticulaire dans la face arrière 20.

La figure 2 représente schématiquement une vue en perspective d'un trou 12 creusé dans la face arrière 20. Le trou 12 en forme de caisson a, sur la face arrière 20, une largeur de 0,8 mm par exemple et une longueur de 1 mm par exemple. Sa profondeur est de 1,3 mm par exemple. Une butée 14, d'une hauteur comprise entre 60 et 160 micromètres, repose au fond du trou. La base de la butée a une largeur et une longueur comprises entre 30 et 100 micromètres. Les parois du trou 12 et de la butée 14 sont orientées suivant les plans d'orientation cristallographiques 111 du silicium. C'est-à-dire que les parois sont inclinées par rapport aux faces avant 10 et arrière 20 et présentent un angle de 54°7 avec le plan des faces avant 10 et arrière 20.

La figure 3 représente schématiquement un dispositif selon l'invention tel qu'il est après travail sur la face arrière 20 de la plaquette de silicium. Un circuit magnétique est déposé dans le trou 12. Ce circuit magnétique comporte un support (tore) 16 en forme de fer à cheval et un bobinage 18. Ce circuit magnétique est une pièce rapportée fabriquée par ailleurs. Ce peut être un circuit du type de ceux fabriqués par la société Applied Magnetics Corporation (AMC). Les extrémités du support 16 sont larges d'environ 300 micromètres par exemple. Le support est en ferrite ou en sendust par exemple. Comme les parois du trou 12 sont inclinées et qu'une butée 14 est ménagée, le circuit magnétique vient s'auto-positionner à l'intérieur du trou 12 ; les extrémités du support 16 du circuit magnétique viennent reposer sur le fond du trou 12.

Le circuit magnétique est fixé au trou 12 par un matériau apte à la soudure du circuit magnétique au trou 12, du verre fusible par exemple. En fait, le circuit magnétique est noyé dans le verre fusible.

Les extrémités du bobinage 18 sont posées à plat de manière à permettre un raccord électrique aisé.

Le procédé est collectif, les circuits magnétiques sont déposés de manière mécanique et automatique au fond du trou 12. La soudure par le verre fusible est réalisée pour tous les circuits en une seule étape.

Une couche 22 d'alumine par exemple est déposée sur la face arrière 20. Cette couche 22 d'épaisseur 20 micromètres par exemple est isolante et protectrice.

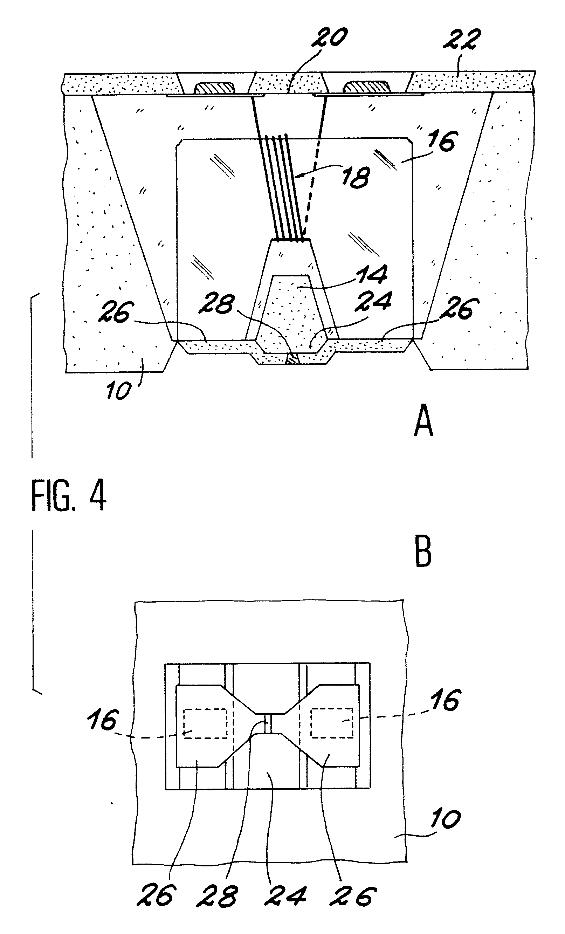

La figure 4A représente schématiquement une coupe du dispositif selon l'invention après réalisation d'un concentrateur de flux sur la face avant 10. Une gravure réticulaire est d'abord pratiquée de manière à mettre à jour les extrémités du support 16 du circuit magnétique. Une avancée 24 est ménagée dans le prolongement de la butée 14. Le concentrateur de flux se compose de deux parties 26 en matériau magnétique, du FeSiAl par exemple. Les deux parties 26 sont séparées par une paroi 28 en matériau amagnétique, du $SiO_2$ par exemple.

Le concentrateur de flux se présente sous forme d'une couche d'épaisseur 20 micromètres par exemple. La paroi amagnétique 28 a une largeur comprise entre 5 et 20 micromètres. Cette largeur est à optimiser en fonction du type de circuit magnétique utilisé.

Le concentrateur de flux est réalisé par des techniques de gravure et de dépôt bien connues de l'homme de métier. La géométrie du concentrateur de flux est obtenue par gravure.

La figure 4B représente schématiquement une vue côté face avant du concentrateur de flux.

Sur l'avancée 24 représentée en tiretés, le concentrateur de flux présente sa plus faible largeur (de l'ordre du micromètre ou moins). Cette largeur correspond à la largeur de la piste magnétique sur laquelle sont inscrites les informations à lire/écrire.

Le concentrateur de flux est en contact avec les extrémités du support 16 par l'intermédiaire de ses parties 26.

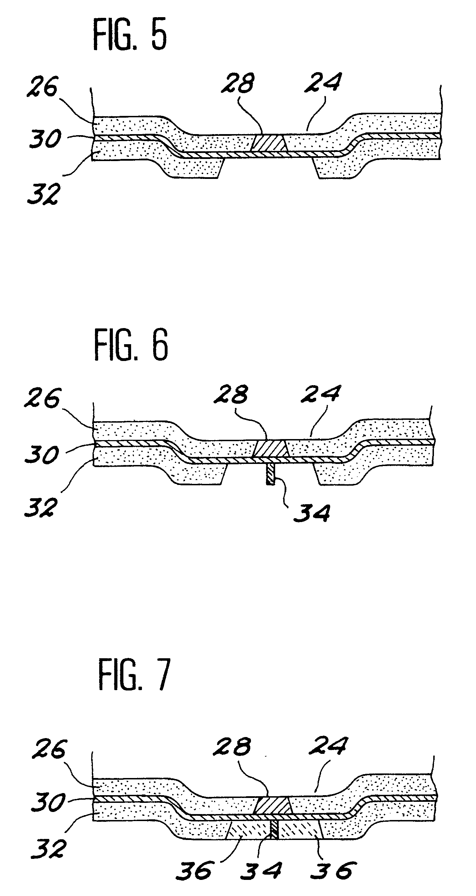

Les figures 5 à 7 représentent schématiquement les étapes de fabrication d'une pièce polaire de lecture et d'écriture.

La figure 5 représente les étapes préliminaires. On dépose sur le concentrateur de flux une couche 30, épaisse de 500 Angströms environ, d'un matériau conducteur et amagnétique. Ce matériau peut être du tungstène. Cette couche 30 amagnétique est d'une épaisseur telle qu'elle ne perturbe que très peu le cheminement des lignes de champ entre le concentrateur et la pièce polaire. On réalise ensuite un masque 32, en $SiO_2$ par exemple, recouvrant partiellement la couche 30 du matériau conducteur et amagnétique. Ce masque délimite la localisation de la pièce polaire d'écriture et de lecture.

La figure 6 représente schématiquement le résultat de la fabrication de l'espaceur amagnétique de la pièce polaire. Cet espaceur amagnétique 34 a une largeur comprise entre 0,2 et 1 micromètre ; il est en $SiO_2$ par exemple.

Pour fabriquer cet espaceur, on réalise une gravure dans une résine déposée sur la couche 30 de matériau amagnétique et conducteur. Cette gravure a la largeur de l'espaceur 34. On dépose ensuite du $SiO_2$ dans la gravure et on élimine la résine.

L'espaceur 34 amagnétique est positionné sensiblement sous la paroi amagnétique 28 du concentrateur de flux.

Le résultat de la dernière étape de fabrication de la pièce polaire est représenté schématiquement sur la figure 7. On dépose par électrolyse par exemple, une couche d'un matériau magnétique du FeNi par exemple. La couche 30 sert alors d'électrode pour l'électrolyse. On réalise ainsi les deux parties magnétiques 36 de la pièce polaire d'écriture et de lecture. Cette couche de matériau magnétique a environ 1 à 5 micromètres d'épaisseur par exemple.

Le procédé de masquage lithographique qui sert à définir la forme de la pièce polaire, permet d'obtenir une largeur correspondant à une largeur de piste pouvant aller de 1 à 10 micromètres selon le cas. De plus, les deux parties magnétiques 36 de la pièce polaire sont autoalignées : elles ne présentent donc pas de fuite dans les lignes de champ. Par ce procédé la largeur de la piste est définie avec une grande précision. Ces avantages permettent d'éviter des signaux parasites (undershoot) lors de la lecture et l'écriture des informations.

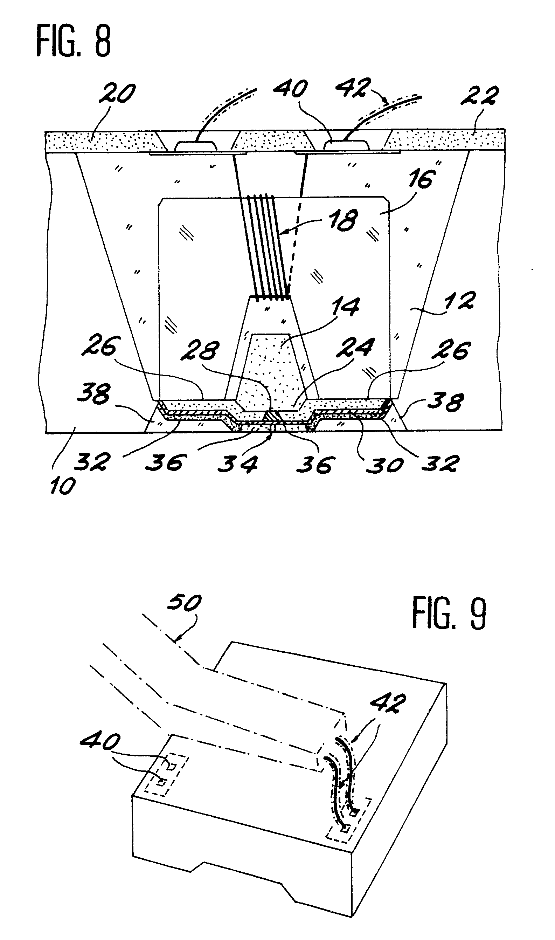

La figure 8 représente schématiquement une coupe longitudinale d'un dispositif selon l'invention.

Le profil de type catamaran a été gravé par un procédé bien connu de l'homme de métier (gravure réticulaire par exemple). La plaquette de silicium a été découpée. Les différents patins sont séparés les uns des autres. On retrouve le circuit magnétique auto-positionné dans le trou 12 et fixé par du verre fusible par exemple. La face arrière 20 est recouverte d'une couche 22 protectrice en alumine par exemple. Des espaces sont pratiqués autour des raccords électriques du bobinage 18. Cela permet une connexion aisée, par soudure verre $SiO_2$ par exemple, à des fils électriques 42.

Du côté face avant 10, on voit que la pièce polaire de lecture et d'écriture et le concentrateur de flux sont maintenus et fixés par un matériau 38 apte à la soudure tel du verre fusible par exemple.

La face avant 10 a subi, avant le découpage de la plaquette, un rodage de manière à assurer sa planéité.

La figure 9 représente schématiquement un patin supportant deux têtes de lecture et d'écriture selon l'invention. Le patin est fixé à un bras 50 qui permet la tenue des fils électriques 42 reliés à l'un des dispositifs.

On distingue qu'un patin comprend deux dispositifs selon l'invention. Un des deux n'est utilisé qu'en cas de mauvais fonctionnement de l'autre.

## Revendications

1. Dispositif de lecture et d'écriture sur un support magnétique, comprenant au moins une tête magnétique de lecture et d'écriture réalisée sur un patin en silicium monocristallin, ce patin présentant un profil de type catamaran, ce patin ayant une face avant (10) destinée à être en vis-à-vis dudit support magnétique et une face arrière (20), les faces avant et arrière (10, 20) étant orientées suivant le plan cristallographique 100 du silicium, le dispositif étant caractérisé en ce que la tête magnétique de lecture et d'écriture comporte :
- un circuit magnétique placé dans un trou (12) pratiqué dans la face arrière (20) du patin, ce trou (12) ayant une forme de caisson aux parois inclinées suivant les plans cristallographiques 111 du silicium, une butée (14) aux parois inclinées suivant les plans cristallographiques 111 étant réservée au fond du trou (12), deux raccords électriques du circuit magnétique affleurant la face arrière (20) du patin, le circuit magnétique étant fixé dans le caisson par un matériau apte à la soudure du circuit magnétique au caisson,
- un concentrateur de flux (26, 28) en contact avec des extrémités du circuit magnétique,
- une pièce polaire de lecture et d'écriture (34, 36) séparée du concentrateur de flux par une couche (30) conductrice et amagnétique, cette pièce polaire affleurant à la face avant du patin, et en ce qu'un matériau apte à maintenir et à fixer au patin le concentrateur de flux et la pièce polaire est en contact avec un masque (32) recouvrant partiellement la couche (30) conductrice et amagnétique, ce masque (32) délimitant une localisation de la pièce polaire d'écriture et de lecture.

2. Dispositif selon la revendication 1, caractérisé en ce que le concentrateur de flux est constitué d'une couche en matériau magnétique, cette couche étant séparée en deux parties (26) par une paroi (28) en matériau amagnétique.

3. Dispositif selon la revendication 2, caractérisé en ce que la couche en matériau magnétique formant les parties (26) du concentrateur de flux est en FeSiAl et en ce que le matériau amagnétique constituant la paroi amagnétique (28) est du $SiO_2$.

4. Dispositif selon l'une quelconque des revendications 1 à 3, caractérisé en ce que la pièce polaire de lecture et d'écriture est constituée d'une couche en matériau magnétique, cette couche étant séparée en deux parties (36) par un espaceur (34) amagnétique.

5. Dispositif selon la revendication 4, caractérisé en ce que les parties (36) magnétiques de la pièce polaire sont en FeNi et en ce que l'espaceur (34) amagnétique est en SiO₂.

6. Dispositif selon l'une quelconque des revendications 1 à 5, caractérisé en ce que la face arrière (20) du patin est recouverte d'une couche (22) protectrice en matériau isolant, des ouvertures étant ménagées autour des raccords électriques.

7. Dispositif selon la revendication 6, caractérisé en ce que la couche (22) protectrice recouvrant la face arrière (20) du patin est en matériau choisi parmi l'alumine et les oxydes isolants.

8. Dispositif selon l'une quelconque des revendications 1 à 7, caractérisé en ce que le matériau apte à souder le circuit magnétique au caisson, et le matériau apte à maintenir et fixer le concentrateur de flux et la pièce polaire sont choisis parmi le verre fusible et les polymères thermodurcissables.

9. Dispositif selon l'une quelconque des revendications 1 à 8, caractérisé en ce que le masque (32) est en SiO₂.

10. Dispositif selon l'une quelconque des revendications 1 à 9, caractérisé en ce que la couche (30) conductrice et amagnétique est en tungstène.

11. Procédé de fabrication d'un dispositif de lecture et d'écriture sur un support magnétique selon la revendication 1, caractérisé en ce qu'il comprend les opérations suivantes, effectuées sur une plaquette de silicium monocristallin ayant une face avant (10) et une face arrière (20) :

sur la face arrière (20) de la plaquette :
- on effectue une gravure réticulaire de manière à creuser un trou (12) en forme de caisson apte à recevoir un circuit magnétique,
- on introduit dans le caisson ledit circuit magnétique, ce circuit magnétique comprenant un bobinage (18) possédant deux raccords électriques et un support (16) ayant des extrémités,
- on remplit le caisson avec un matériau apte à souder le circuit magnétique au caisson,
- on dépose une couche (22) de protection en matériau isolant en ménageant un espace autour des raccords électriques ;

sur la face (10) avant de la plaquette :
- on effectue une gravure de manière à mettre à jour au fond de la gravure les extrémités du support (16),
- on réalise au fond de la gravure de la face avant (10) un concentrateur de flux ayant une forme dont une plus petite largeur correspond à une largeur d'une piste de stockage des informations à lire/écrire, ce concentrateur de flux étant en contact avec des extrémités du support (16) du circuit magnétique,
- on dépose une couche (30) conductrice et amagnétique recouvrant le concentrateur de flux.
- on forme un dépôt servant de masque (32) sur la couche (30) conductrice et amagnétique et délimitant la localisation d'une pièce polaire de lecture et d'écriture,
- on réalise une pièce polaire comprenant deux parties (36) magnétiques séparées par un espaceur (34) amagnétique, cette pièce polaire étant en contact avec la couche (30) conductrice et amagnétique,
- on dépose une couche de matériau apte à maintenir et à fixer sur la plaquette le concentrateur de flux et la pièce polaire d'écriture et de lecture,
- on effectue un rodage de la face avant, de manière à avoir une surface plane.
- on grave sur la plaquette des patins présentant le profil d'un catamaran.
- on découpe la plaquette pour séparer les différents patins, chaque patin comprenant deux têtes d'écriture et de lecture.

FIG. 1

FIG. 2

FIG. 3

FIG. 4

## FIG. 5

## FIG. 6

## FIG. 7

FIG. 8

FIG. 9

# RAPPORT DE RECHERCHE EUROPEENNE

Office européen des brevets

Numero de la demande

EP 89 40 1004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 1, no. 103, 13 septembre 1977, page 3310 E 77; & JP-A-52 36 016 (HITACHI SEISAKUSHO K.K.) 19-03-1977 * Résumé * --- | 1,11 | G 11 B 5/10 G 11 B 5/31 G 11 B 5/187 |
| A | US-A-3 564 522 (STEVENS, Jr.) * Colonne 2, lignes 40-48,52-68; colonne 3, lignes 48-63; colonne 4, lignes 36-39,49-73; colonne 5, lignes 6-17,35-46; figures 1-4,7,8,12,13 * --- | 1,11 | |
| A | EP-A-0 262 028 (COMMISSARIAT A L'ENERGIE ATOMIQUE) * Colonne 2, lignes 21-38; colonne 2, ligne 56 - colonne 4, ligne 36; figures 5i,5l,5m,6 * --- | 1,4,5, 10,11 | |
| A | US-A-3 672 043 (TRIMBLE et al.) * Colonne 1, ligne 63 - colonne 2, ligne 39; colonne 3, lignes 11-28; colonne 4, ligne 42 - colonne 5, ligne 5; figures 1,2,9-12,23-25 * --- | 1,4,5, 11 | |
| A | US-A-3 601 871 (PIERCE) * Colonne 2, ligne 72 - colonne 3, ligne 36; colonne 4, lignes 3-8,53-58; colonne 5, ligne 29 - colonne 6, ligne 10; figures 1-4,11,13 * --- | 1,11 | DOMAINES TECHNIQUES RECHERCHES (Int. Cl.4) G 11 B |
| A | PATENT ABSTRACTS OF JAPAN, vol. 11, no. 299 (P-621)[2746], 29 septembre 1987, page 77 P 621; & JP-A-62 92 108 (HITACHI LTD) 27-04-1987 * Résumé * --- -/- | 1,4,6, 11 | |

Le présent rapport a été établi pour toutes les revendications

| Lieu de la recherche | Date d'achevement de la recherche | Examinateur |
|---|---|---|
| LA HAYE | 21-07-1989 | FUX J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P0402)

Office européen
des brevets

Numero de la demande

EP 89 40 1004

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | PATENT ABSTRACTS OF JAPAN, vol. 2, no. 56, 24 avril 1978, page 1427 E 78; & JP-A-53 20 913 (HITACHI SEISAKUSHO K.K.) 25-02-1978 * Résumé * --- | 1,11 | |
| A | GB-A- 879 600 (VECTRON ELECTRO-PHYSICS LTD) ----- | | |

DOMAINES TECHNIQUES
RECHERCHES (Int. Cl.4)

I e présent rapport a été établi pour toutes les revendications

| Lieu de la recherche | Date d'achèvement de la recherche | Examinateur |
|---|---|---|
| LA HAYE | 21-07-1989 | FUX J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)